# EUROPEAN PATENT SPECIFICATION

(11) **EP 0 937 609 B1**
(45) Date of publication and mention of the grant of the patent: **01.10.2003**
(21) Application number: 99102245.0
(22) Date of filing: 04.02.1999
(51) Int. Cl.: B60R 11/02

(54) **A security apparatus and method for electric product**
Sicherheitsvorrichtung und -verfahren für ein elektrisches produkt
Appareil et procédé de sécurité pour un produit électrique

(30) Priority: 24.02.1998 JP 5733298
(43) Date of publication of application: 25.08.1999
(73) Proprietor: KABUSHIKI KAISHA KENWOOD, Shibuya-ku Tokyo (JP)
(72) Inventor: Ono, Naomitsu, Sagamihara-shi, Kanagawa 229-1103 (JP)
(74) Representative: Patentanwälte Leinweber & Zimmermann

(56) References cited:
- DE-A- 4 300 504
- US-A- 4 494 114
- US-A- 4 838 377
- US-A- 5 091 724
- US-A- 5 418 761

## Description

### BACKGROUND OF THE INVENTION

### 1. Field of the Invention

The present invention relates to a security apparatus built in an electric product such as a car audio apparatus mounted on a car and a security method for use in the electric product.

### 2. Description of the Related Art

A car audio apparatus mounted on a car in Europe and America has a built-in security apparatus in order to prevent robbery of the car audio apparatus. US 4 838 377 discloses such a security apparatus built into a car audio system with the features of the preamble of claims 1, 3, 6 and 7. A security code itself or security data which is obtained by enciphering the security code is stored in a non-volatile memory of a car audio apparatus, and when a user purchases the car audio apparatus, the user receives a sheet of paper on which the security code (generally the number of several digits) is printed. After the car audio apparatus is mounted on a car and connected to a car battery and the power is supplied to the apparatus, the car audio apparatus waits for an input of the security code by the user. If the security code corresponding to the security data registered in the non-volatile memory is entered, the car audio apparatus can be used. After the security code is entered once, it is not necessary to enter it again even if the engine key of the car is turned off, because a power is maintained to be supplied from the car battery to the car audio apparatus, unless the battery is discharged or the car audio apparatus is mounted on another car.

Also, for example, if an incorrect security code is entered during the initial security code reception state, entering the security code is not allowed during a predetermined time and thereafter again the security code reception state resumes. If an incorrect security code is again entered at this time, the next security code reception state starts after a predetermined time longer than the first predetermined time. Namely, a standby time for the security code reception state is prolonged every time an incorrect security code is entered. In such manner, it is possible to prevent a robber from entering security codes on a trial-and-error basis and finding the correct security code by chance. Even if an incorrect security code is entered and the security code reception state is intercepted, the initial security code reception state resumes if the power supply of the battery to the car audio apparatus is disconnected and then again connected. However, this power supply disconnection and connection require long and complicated works by the robber.

Conventionally, in a factory of manufacturing electric products such as car audio apparatus, after each of the electric products has been assembled various adjustments and operation checks are performed, and if the inspection is passed, a serial number is given to the product and the corresponding security code is written in a non-volatile memory within the product by using a code writing instrument, and thereafter the product is shipped. Thus, the registration of the security data is performed at the final step of the manufacturing line. And, to ensure the implementation of various adjustments and operation checks at the intermediate steps, it is usual that the security is not effected unless the security data is registered in the apparatus. Therefore, there is a disadvantage that the robber of the electric product carrying the security apparatus can use the robbed product by substituting the memory with the security data being eliminated for the memory with the security data being registered.

To dissolve such disadvantage, it is worked out that the security apparatus is designated so as to be unable to use the product unless the security data is registered in the product. However, in this case, it is required to register the security data during steps before the steps of various adjustments and operation checks so that the adjustments and operation checks can be implemented in the operable condition. While, since the security data registered in each of the products is different for each serial number of the product, if the security data is registered prior to the adjustments and operation checks, an inspection worker needs to enter each different security code for each product before the worker starts inspection. A work efficiency is therefore lowered considerably.

That is, the inspection worker needs to enter each different security code for each product before the worker starts inspection every time the power supply line is disconnected and connected in each step of the adjustments and operation checks and therefore the work efficiency is lowered.

Thus, while it is a problem in respect of defenseless against robbery that the electric product (in which the security data is not registered) can be used, there is a need for operating the product during a temporary period without registering the security data.

### SUMMARY OF THE INVENTION

The present invention has been made in view of the above problem in the prior art.

It is an object of the present invention to provide a security apparatus for an electric product capable of improving a manufacture work efficiency of such electric products while a security is retained.

To attain such object, there is provided a security apparatus as defined in claims 1 and 3 and a security method as defined in claims 6 and 7; in the present invention, the security data is registered in each of products at the final step of the manufacturing line in such a way that the product is operable during a predetermined period required for various adjustments and operation checks implemented in the manufacturing line even if the security data is not registered in the product.

The security apparatus for an electric product of this invention is built in the electric product. The security apparatus comprises the following constituents (a) to (d).
(a) a non-volatile memory for storing security data;
(b) security data registration detecting means for detecting whether or not the security data is being stored in the non-volatile memory;
(c) means for measuring a predetermined lapse of time from a predetermined instruction; and
(d) operation control means for allowing the electric product to be operable during a predetermined time period from the predetermined instruction and making the electric product inoperable thereafter, if the security data registration detecting means detects that the security data is not registered.

The security data to be registered in the non-volatile memory includes not only the security code itself but also data obtained by enciphering the security code. Examples of the electric product are car audio equipments such as a car radio and a CD or tape player mounted on a car and supplied with a d.c. power from a car battery. The predetermined instruction as a trigger for beginning to measure the predetermined time period during which the electric product is allowed to be operable is, for example, a supply of a back-up power of the car battery to the electric product, a supply of an ignition power to the electric product, a turning-on of a power switch of the electric product or the like, and the predetermined time period during which the electric product is allowed to be operable, is approximately a time period, e.g., 30 minutes which is required for a worker in the manufacture factory of electric products to complete adjustments and operation checks of an electric product after assembly. A process of making the electric product inoperable includes a process of forcibly turning off a power source of the electric product, a process of stopping the operation of one or more units of the electric product, and a process of fixing a volume to a maximum volume in the case of a car audio or the like.

A newly mounted non-volatile memory has usually (i) FF's (two digits of hexadecimal, 8 bits in total) written in all addresses and (ii) random data written in all addresses. When security data is registered in a newly mounted non-volatile memory, the security data and another data (reference data) associated with that security data are written into respective predetermined addresses of the non-volatile memory. This reference data is data such as a function of the security data or data obtained by enciphering the security data, which is associated with the security data under a predetermined rule. For example, it is possible to elect as the reference data the sum of the security data (binary number) and a predetermined number or the 2-supplementary number of the security data (binary number). Concretely, if the security data is "AB" (two digits of hexadecimal), the reference data "E2" can be obtained by adding a predetermined number "37" to "AB" or the reference data "64" can be obtained as the 2-supplementary number of "AB". In such situation, in the above case (i), since both the security data and reference data read,at respective predetermined addressed from the non-volatile memory are "FF", even if these data are collated with each other, these data do not satisfy a predetermined correspondence relationship. Therefore, it can be judged that the security data is not still registered in the non-volatile memory. And also, in the above case (ii), even if the security data and reference data read from the non-volatile memory are collated with each other, since the possibility of these data satisfying the predetermined correspondence relationship is very low, also in this case it can be judged that the security data is not still registered in the non-volatile memory.

If it is judged in the above manner that the security data is not registered, the electric product is made operable only during the predetermined time period after the predetermined instruction (e.g., the supply of the electric power to the electric product). During this predetermined time period, the adjustments and operation checks before shipment of an electric product can be performed without entering the security code, thus reducing the worker's labor. And also, after the shipment, even if the electric product is robbed by a robber and the robber replaces the non-volatile memory storing the security data with another memory (in which the security data is not stored), the electric product is made operable only during the initial predetermined time period and thereafter the electric product becomes inoperable. Therefore the security of the electric product can be ensured.

The security apparatus for an electric product of this invention is built in the electric product. The security apparatus according to another aspect of the invention comprises the following constituents (a) to (d).
(a) a non-volatile memory for storing security data and another data (reference data) associated with the security data;
(b) judging means for judging that either the security data is not registered or the non-volatile memory is not present, if there is not a predetermined correspondence relationship between the security data and the reference data as a result of collating these data with each other;
(c) means for measuring a predetermined lapse of time from a predetermined instruction; and
(d) operation control means for allowing the electric product to be operable during a predetermined time period after the predetermined instruction and making the electric product inoperable thereafter, if the judging means judges that either the security data is not registered or the non-volatile memory is not present.

Similar to the case wherein the security data is not registered, it is difficult to correct the security data by the correction data if the non-volatile memory is dismounted. Thus, the security apparatus for the electric product can ensure the security of the product even if the non-volatile memory is dismounted.

The method of detecting whether or not the non-volatile memory is dismounted is (i) to detect whether or not there is the predetermined correspondence relationship between the security data and the reference data by collating these data with each other. In addition to the method (i), the following methods (ii) and (iii) may also be used.
(ii): The non-volatile memory is not dedicated only to registering security data, but has another addresses at which data can be read and written. Therefore, if data cannot be written at the addresses other than the security data addresses, it can be judged that the non-volatile memory was dismounted.
(iii): Pull-up resistors are generally connected to the CPU read ports of the non-volatile memory. Therefore, even if the non-volatile memory is not mounted, when data at the security data addresses is read, for example, FF's (two digits of hexadecimal, 8 bits in total) are read. Therefore, it can be judged that the non-volatile memory was dismounted if the read security data is FF's. Instead of the method (i), the methods (ii) and (iii) can therefore be used to judge whether the non-volatile memory was removed or destroyed.

The security apparatus for the electric product of this invention may further comprises the following constituent (e).
(e) operation transfer means for transferring an operation to a same operation as an operation which is executed when the security data registration detecting means detects that the security data is already registered, if the security data is registered in the non-volatile memory while the operation control means allows the electric product to be operable.

In the manufacture factory of electric products, after the finished electric product is tested before shipment, a serial number is given to the electric product and security data is registered in the non-volatile memory by a data writing instrument. After the registration, the same process as the process executed when it is judged that the security data is already registered, is performed. In such manner, a security code confirmation test and the like can be continuously and efficiently performed.

### BRIEF DESCRIPTION OF THE DRAWINGS

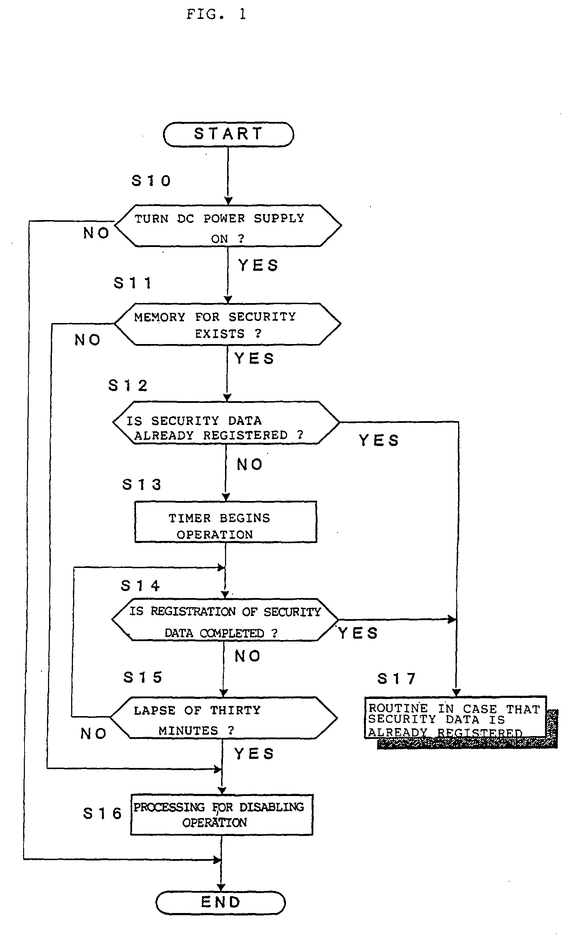

Fig. 1 is a flow chart illustrating a main operation of a security routine for a car audio apparatus.

### DETAILED DESCRIPTION OF THE PREFERRED EMBODIMENTS

An embodiment of the present invention will be described with reference to Fig. 1.

Fig. 1 is a flow chart illustrating a main operation of a security routine for a car audio apparatus. At Step S10 it is checked whether a d.c. power source such as a battery is turned on and the power is supplied to a car audio apparatus. If YES, the flow advances to Step S11, whereas if NO, the security routine is terminated. At Step S11 it is checked whether there is a non-volatile memory for registering security data. If present, the flow advances to Step S12, whereas if not, the flow advances to Step S16. The non-volatile memory for registering security data is also used, for example, to store a broadcast station name or frequency lastly received with the car audio, and can read and write data at a plurality of addresses. It is judged in the following way whether or not the non-volatile memory for security use exists. For example, it is judged whether or not there is a predetermined correspondence relationship between the security data and the reference data read from the non-volatile memory by collating these data with each other. If there is not the predetermined correspondence relationship between these data, it can be judged that the non-volatile memory is dismounted, i.e., the non-volatile memory does not exist. Or, arbitrary data is tried to be written into the non-volatile memory at the readable/writable addresses other than the security data address, and if the data can not be written, it can be judged that the non-volatile memory is dismounted, i.e., the non-volatile memory does not exist. At Step S12 it is judged whether the security data is already registered in the non-volatile memory. If already registered, the flow advances to Step S17, whereas if not, the flow advances to Step S13. A newly mounted non-volatile memory has usually (i) FF's (two digits of hexadecimal, 8 bits in total) written in all addresses and (ii) random data written in all addresses. When the security data is registered in a newly mounted non-volatile memory, the security data and the reference data associated with that security data are written into the non-volatile memory. In both the cases (i) and (ii), it can be judged that the security data is not still registered in the non-volatile memory, if it is judged that there is not the predetermined correspondence relationship between the security data and reference data read from the non-volatile memory as a result of collating these data with each other. Data registered as the security data in the non-volatile memory is usually not the security codes itself, but what is obtained by enciphering the security codes. Even if a robber of the car audio can succeed in reading this data, it cannot be used as the security code the owner of the car audio enters.

At Step S13 a timer starts operating to measure a lapse time. At Step S14 it is checked whether the security data is entered. If YES, the flow advances to Step S17, whereas if NO, the flow advances to Step S15 whereat it is checked from a value measured by the timer whether 30 minutes have lapsed. If YES, the flow advances to Step S16, whereas if NO, the flow returns to Step S14. The time period of 30 minutes is a time required for a worker in a car audio manufacture factory to perform adjustments and operation checks of one car audio. In the car audio manufacture factory, the adjustments and operation checks of each car audio are completed in a period shorter than 30 minutes. At Step S16, the car audio is made inoperable. A process of making the electric product inoperable includes not only a process of forcibly turning off a power source of the car audio, but also a process of fixing a volume to a maximum volume to make the volume unadjustable, or other processes. At Step S17 a routine in case that the security data is already registered is performed. This routine includes, for example, a process of prompting the user to enter the security code, and if an erroneous security code is entered once or a plurality of times, stopping the operation of the car audio during a predetermined time period.

As described so far, in the car audio manufacture factory, it is possible to perform adjustments and operation checks of a car audio without entering the security code which differs from each car audio. Regarding to the robbed car audio, even if the non-volatile memory storing the security data is dismounted or replaced with another memory by the robber, the robbed car audio only operates for a predetermined period (e.g., 30 minutes) after the power is supplied to the car audio and therefore, the robber has almost nothing valuable.

## Claims

1. A security apparatus built in an electric product, the security apparatus allowing the electric product to be usable when security data registered in the security apparatus matches with a security code taken in from an outside,
(a) a non-volatile memory for storing the security data;
(b) security data registration detecting means detecting whether or not the security data is stored in said non-volatile memory;
(c) means measuring a predetermined lapse of time from a predetermined instruction; and
(d) operation control means allowing the electric product to be operable during the predetermined time period from the predetermined instruction and making the electric product inoperable thereafter, if said security data registration detecting means detects that the security data is not stored in said non-volatile memory,
**characterized in that**
said non-volatile memory also stores another data associated with the security data and said security data registration detecting means detects wether or not the security data is stored in said non-volatile memory using the another data stored in said non-volatile memory.

2. The security apparatus according to claim 1, further comprising:
(e) operation transfer means for transferring an operation to the same operation as an operation which is executed when said security data registration detecting means detects that the security data is already registered, if the security data is registered in said non-volatile memory while said operation control means allows the electric product to be operable.

3. A security apparatus built in an electric product, the security apparatus allowing the electric product to be usable when security data registered in the security apparatus matches with a security code taken in from an outside, the security apparatus comprising:
(a) a non-volatile memory for storing the security data and another data;
(b) means measuring a predetermined lapse of time from a predetermined instruction;
**characterized by**
(c) judging means judging that either the security data is not stored in said non-volatile memory or said non-volatile memory is not present, if there is not a predetermined association between the security data and another data associated with that security data read from said non-volatile memory; and
(d) operation control means allowing the electric product to be operable during a predetermined time period from the predetermined instruction and making the electric product inoperable thereafter, if said judging means judges that either the security data is not stored in said non-volatile memory or said non-volatile memory is not present.

4. The security apparatus according to claim 3, further comprising:
(e) operation transfer means for transferring an operation to the same operation as an operation which is executed when said judging means judges that said non-volatile memory is present and the security data is already registered therein, if the security data is registered in said non-volatile memory while said operation control means allows the electric product to be operable.

5. The security apparatus according to any preceding claim, wherein the predetermined instruction relies on a supply of an electric power to the electric product.

6. A security method for use in an electric product, the security method allowing the electric product to be usable when security data registered in a memory for security use matches with a security code taken in from an outside, wherein the security method includes the step of
detecting whether or not securiry data is registered in said non-volatile memory, and if the detection result is negative,
allowing the electric product to be operable during a predetermined time period from a predetermined instruction and
prohibiting the operation of the electric product after said predetermined time period,
**characterized in that**
another data associated with said security data is stored in said non-volatile memory besides said security data and said detecting is performed using said another data.

7. A security method for use in an electric product, the security method allowing the electric product to be usable when security data registered in a non-volatile memory for security use matches with a security code taken in from an outside,
**characterized by**
checking whether or not there is a predetermined association between said security data and another data read from said non-volatile memory, and
if the checking result is negative,
judging that either the security data is not or said non-volatile memory is not present, and allowing the electric product to be operable during a predetermined time period from a predetermined instruction and making the electric product inoperable thereafter, if the judging is that either the security data is not registered or said non-volatile memory is not present.

## Patentansprüche

1. In ein elektrisches Gerät eingebaute Sicherheitsvorrichtung, wobei die Sicherheitsvorrichtung zulässt, dass das elektrische Gerät benutzt werden kann, wenn in der Sicherheitsvorrichtung registrierte Sicherheitsdaten mit einem von außen zugeführten Sicherheitscode übereinstimmen, wobei die Sicherheitsvorrichtung aufweist:
(a) einen nichtflüchtigen Speicher zum Speichern der Sicherheitsdaten;
(b) eine Sicherheitsdatenregistrierungs-Erfassungseinrichtung, welche erfasst, ob die Sicherheitsdaten in dem nichtflüchtigen Speicher gespeichert sind oder nicht;
(c) eine Einrichtung, welche beginnend bei einer vorbestimmten Anweisung einen vorbestimmten Zeitraum misst; und
(d) eine Betriebssteuereinrichtung, welche zulässt, dass das elektrische Gerät während des bei der vorbestimmten Anweisung beginnenden vorbestimmten Zeitraums betrieben werden kann, und welche dafür sorgt, dass das elektrische Gerät danach nicht betrieben werden kann, falls die Sicherheitsdatenregistrierungs-Erfassungseinrichtung erfasst, dass die Sicherheitsdaten nicht im nichtflüchtigen Speicher gespeichert sind,
**dadurch gekennzeichnet, dass**
der nichtflüchtige Speicher auch weitere den Sicherheitsdaten zugeordnete Daten speichert, und die Sicherheitsdatenregistrierungs-Erfassungseinrichtung erfasst, ob die Sicherheitsdaten im nichtflüchtigen Speicher gespeichert sind oder nicht, und zwar unter Verwendung der im nichtflüchtigen Speicher gespeicherten weiteren Daten.

2. Sicherheitsvorrichtung nach Anspruch 1, welche weiter aufweist:
(e) eine Betriebstransfereinrichtung, welche einen Betrieb auf den gleichen Betrieb wie einen Betrieb transferiert, der ausgeführt wird, wenn die Sicherheitsdatenregistrierungs-Erfassungseinrichtung erfasst, dass die Sicherheitsdaten bereits registriert sind, falls die Sicherheitsdaten im nichtflüchtigen Speicher registriert werden während die Betriebssteuereinrichtung zulässt, dass sich das elektrische Gerät betreiben lässt.

3. In ein elektrisches Gerät eingebaute Sicherheitsvorrichtung, wobei die Sicherheitsvorrichtung zulässt, dass das elektrische Gerät benutzt werden kann, wenn in der Sicherheitsvorrichtung registrierte Sicherheitsdaten mit einem von außen zugeführten Sicherheitscode übereinstimmen, und die Sicherheitsvorrichtung aufweist:
(a) einen nichtflüchtigen Speicher zum Speichern der Sicherheitsdaten und weiterer Daten;
(b) eine Einrichtung, welche beginnend bei einer vorbestimmten Anweisung einen vorbestimmten Zeitraum misst;
**gekennzeichnet durch**
(c) eine Beurteilungseinrichtung, welche beurteilt, dass entweder die Sicherheitsdaten nicht im nichtflüchtigen Speicher gespeichert sind oder der nichtflüchtige Speicher nicht vorhanden ist, falls es keinen vorbestimmten Zusammenhang zwischen den Sicherheitsdaten und mit diesen Sicherheitsdaten in Zusammenhang stehenden, aus dem nichtflüchtigen Speicher ausgelesenen weiteren Daten gibt; und
(d) eine Betriebssteuereinrichtung, welche zulässt, dass das elektrische Gerät während des vorbestimmten Zeitraums beginnend bei der vorbestimmten Anweisung betrieben werden kann, und dafür sorgt, dass das elektrische Gerät danach nicht betrieben werden kann, falls die Beurteilungseinrichtung beurteilt, dass entweder die Sicherheitsdaten nicht im nichtflüchtigen Speicher gespeichert sind oder der nichtflüchtige Speicher nicht vorhanden ist.

4. Sicherheitsvorrichtung nach Anspruch 3, welche weiter aufweist:
(e) eine Betriebstransfereinrichtung, welche einen Betrieb auf den gleichen Betrieb wie einen Betrieb transferiert, der ausgeführt wird, wenn die Beurteilungseinrichtung beurteilt, dass der nichtflüchtige Speicher vorhanden ist und die Sicherheitsdaten bereits in diesem registriert sind, falls die Sicherheitsdaten im nichtflüchtigen Speicher registriert werden während die Betriebssteuereinrichtung zulässt, dass sich das elektrische Gerät betreiben lässt.

5. Sicherheitsvorrichtung nach einem der vorhergehenden Ansprüche, bei welcher die vorbestimmte Anweisung auf einem Zuführen von elektrischem Strom zum elektrischen Gerät beruht.

6. Sicherheitsverfahren zur Verwendung in einem elektrischen Gerät, wobei das Sicherheitsverfahren zulässt, dass das elektrische Gerät benutzt werden kann, wenn in einem zu Sicherheitszwecken dienenden Speicher registrierte Sicherheitsdaten mit einem von außen zugeführten Sicherheitscode übereinstimmen, wobei das Sicherheitsverfahren einen Schritt umfasst, bei dem:
erfasst wird, ob Sicherheitsdaten im nichtflüchtigen Speicher registriert sind oder nicht, und falls das Ergebnis der Erfassung negativ ist,
zugelassen wird, dass das elektrische Gerät während eines bei einer vorbestimmten Anweisung beginnenden vorbestimmten Zeitraums betrieben werden kann und
das Betreiben des elektrischen Gerätes nach diesem vorbestimmten Zeitraum verhindert wird,
**dadurch gekennzeichnet, dass**
den Sicherheitsdaten zugeordnete weitere Daten außer diesen Sicherheitsdaten im nichtflüchtigen Speicher gespeichert sind und das Erfassen unter Verwendung dieser weiteren Daten erfolgt.

7. Sicherheitsverfahren zur Verwendung in einem elektrischen Gerät, wobei das Sicherheitsverfahren zulässt, dass das elektrische Gerät benutzt werden kann, wenn in einem zu Sicherheitszwecken dienenden nichtflüchtigen Speicher registrierte Sicherheitsdaten mit einem von außen zugeführten Sicherheitscode übereinstimmen,
**dadurch gekennzeichnet, dass**
überprüft wird, ob es einen vorbestimmten Zusammenhang zwischen den Sicherheitsdaten und weiteren aus dem nichtflüchtigen Speicher ausgelesenen Daten gibt, und
falls das Ergebnis der Überprüfung negativ ist,
beurteilt wird, dass entweder die Sicherheitsdaten nicht registriert sind oder der nichtflüchtige Speicher nicht vorhanden ist, und zugelassen wird, dass das elektrische Gerät während eines bei der vorbestimmten Anweisung beginnenden vorbestimmten Zeitraums betrieben werden kann, und dafür gesorgt wird, dass das elektrische Gerät danach nicht betrieben werden kann, falls beurteilt wird, dass entweder die Sicherheitsdaten nicht registriert sind oder der nichtflüchtige Speicher nicht vorhanden ist.

## Revendications

1. Appareil de sécurité intégré dans un produit électrique, l'appareil de sécurité permettant l'utilisation du produit électrique lorsque des données de sécurité enregistrées dans l'appareil de sécurité correspondent à un code de sécurité entré de l'extérieur, l'appareil de sécurité comprenant :
(a) une mémoire non volatile pour stocker les données de sécurité ;
(b) un moyen de détection d'enregistrement des données de sécurité détectant si oui ou non les données de sécurité sont stockées dans ladite mémoire non volatile ;
(c) un moyen mesurant un lapse de temps prédéterminé à partir d'une instruction prédéterminée ; et
(d) un moyen de commande de fonctionnement permettant le fonctionnement du produit électrique pendant la période de temps prédéterminée à partir de l'instruction prédéterminée et rendant le produit électrique non fonctionnel ensuite si ledit moyen de détection d'enregistrement des données de sécurité détecte que les données de sécurité ne sont pas stockées dans ladite mémoire non volatile,
**caractérisé en ce que**
ladite mémoire non volatile stocke également d'autres données associées aux données de sécurité, et ledit moyen de détection d'enregistrement des données de sécurité détecte si oui ou non les données de sécurité sont stockées dans ladite mémoire non volatile en utilisant les autres données stockées dans ladite mémoire non volatile.

2. Appareil de sécurité selon la revendication 1, comprenant en outre :
(e) un moyen de transfert d'opération pour transférer une opération à la même opération qu'une opération qui est exécutée lorsque ledit moyen de détection d'enregistrement des données de sécurité détecte que les données de sécurité sont déjà enregistrées, si les données de sécurité sont enregistrées dans ladite mémoire non volatile pendant que ledit moyen de commande de fonctionnement permet le fonctionnement du produit électrique.

3. Appareil de sécurité intégré dans un produit électrique, l'appareil de sécurité permettant l'utilisation du produit électrique lorsque les données de sécurité enregistrées dans l'appareil de sécurité correspondent à un code de sécurité entré de l'extérieur, l'appareil de sécurité comprenant :
(a) une mémoire non volatile pour stocker les données de sécurité et d'autres données ;
(b) un moyen pour mesurer un lapse de temps prédéterminé à partir d'une instruction prédéterminée ;
**caractérisé par**
(c) un moyen d'appréciation établissant que soit les données de sécurité ne sont pas stockées dans ladite mémoire non volatile soit que ladite mémoire non volatile n'est pas présente s'il n'y a pas d'association prédéterminée entre les données de sécurité et d'autres données associées à ces données de sécurité lues dans ladite mémoire non volatile ; et
(d) un moyen de commande de fonctionnement permettant le fonctionnement du produit électrique pendant une période de temps prédéterminée à partir de l'instruction prédéterminée et rendant le produit électrique inopérant ensuite si ledit moyen d'appréciation établit que soit les données de sécurité ne sont pas stockées dans ladite mémoire non volatile soit que ladite mémoire non volatile n'est pas présente.

4. Appareil de sécurité selon la revendication 3, comprenant en outre :
(e) un moyen de transfert d'opération pour transférer une opération à la même opération qu'une opération qui est exécutée lorsque ledit moyen d'appréciation établit que ladite mémoire non volatile est présente et que les données de sécurité sont déjà enregistrées dans celle-ci, si les données de sécurité sont enregistrées dans ladite mémoire non volatile pendant que ledit moyen de commande de fonctionnement permet le fonctionnement du produit électrique.

5. Appareil de sécurité selon l'une des revendications précédentes, où l'instruction prédéterminée est basée sur une alimentation du produit électrique en puissance électrique.

6. Procédé de sécurité pour utilisation dans un produit électrique, le procédé de sécurité permettant l'utilisation du produit électrique lorsque des données de sécurité enregistrées dans une mémoire pour l'utilisation de la sécurité correspondent à un code de sécurité entré de l'extérieur, où le procédé de sécurité comprend les étapes consistant à
- détecter si oui ou non les données de sécurité sont enregistrées dans ladite mémoire non volatile, et si le résultat de la détection est négatif,
- permettre au produit électrique de fonctionner pendant une période de temps prédéterminée à partir d'une instruction prédéterminée et
- empêcher le fonctionnement du produit électrique après ladite période de temps prédéterminée,
**caractérisé en ce que**
d'autres données associées auxdites données de sécurité sont stockées dans ladite mémoire non volatile à part lesdites données de sécurité, et ladite détection est exécutée en utilisant les autres données précitées.

7. Procédé de sécurité pour utilisation dans un produit électrique, le procédé de sécurité permettant l'utilisation du produit électrique lorsque les données de sécurité enregistrées dans une mémoire non volatile en vue d'une utilisation de sécurité correspondent à un code de sécurité entré de l'extérieur,
**caractérisé par**
- vérifier si oui ou non il y a une association prédéterminée entre lesdites données de sécurité et d'autres données lues dans ladite mémoire non volatile et
- si le résultat de la vérification est négatif,
- établir que soit les données de sécurité ne sont pas soit ladite mémoire non volatile n'est pas présente, et permettre le fonctionnement du produit électrique pendant une période de temps prédéterminée à partir d'une instruction prédéterminée et rendre le produit électrique inopérant ensuite s'il est établi que soit les données de sécurité ne sont pas soit ladite mémoire non volatile n'est pas présente.
